# EUROPEAN PATENT APPLICATION

(11) **EP 4 703 678 A1**
(43) Date of publication of application: **04.03.2026**
(21) Application number: 24796883.7
(22) Date of filing: 17.04.2024
(51) Int. Cl.: G01B 11/30

(54) **ENVIRONMENT RECOGNITION DEVICE**

(30) Priority: 28.04.2023 JP 2023074388
(71) Applicant: Astemo, Ltd., Chiyoda-ku, Tokyo 1000004 (JP)
(72) Inventor: ENDO, Takeshi, Tokyo 100-8280 (JP); NAGASAKI, Takeshi, Hitachinaka-shi, Ibaraki 312-8503 (JP); MATONO, Haruki, Tokyo 100-8280 (JP)
(74) Representative: Strehl & Partner mbB
(86) International application number: PCT/JP2024/015239
(87) International publication number: WO 2024/225130

(57) **Abstract**

An environment recognition device (1) mounted on a vehicle includes: an image acquisition unit (100) that acquires an image captured by a camera (2); a traveling environment recognition unit (101) that recognizes a three-dimensional object positioned at a boundary of a traveling path based on the image; and an uneven portion detection unit (102) that calculates a height of the three-dimensional object in a depth direction, and detects an uneven portion of a road surface of the traveling path based on a calculated height change.

## Description

### Technical Field

The present invention relates to an environment recognition device.

### Background Art

A structure such as a speed bump is installed on a road surface in order to suppress a vehicle from exceeding a speed limit. When the vehicle passes through the speed bump at a speed in a high vehicle speed range without noticing the installed speed bump, a strong impact is applied to the driver. Therefore, it is expected to recognize the speed bump using a preventive safety function and enable vehicle deceleration, suspension control, and the like. PTL 1 discloses a speed bump detection method using a stereo camera. PTL 1 discloses a technology for detecting a speed bump by analyzing disparity of a stereo camera and detecting an uneven portion of a road surface.

### Citation List

### Patent Literature

PTL 1: JP 2021-135596 A

### Summary of Invention

### Technical Problem

The speed bump detection method in PTL 1 uses disparity of the road surface. In general, it is known that accuracy of the disparity of the road surface decreases as the distance increases, and it is difficult to calculate the disparity at night due to noise such as blurring. Therefore, it is a problem to detect the uneven portion such as the speed bump with high accuracy even when the accuracy of the disparity of the road surface is low.

The present invention has been made in view of the above points, and an object of the present invention is to obtain an environment recognition device that detects an uneven portion such as a speed bump with high accuracy.

### Solution to Problem

An environment recognition device of the present invention that solves the above problem is an environment recognition device mounted on a vehicle, the environment recognition device including: an image acquisition unit that acquires an image captured by a camera; a traveling environment recognition unit that recognizes a three-dimensional object positioned at a boundary of a traveling path based on the image; and an uneven portion detection unit that calculates a height of the three-dimensional object in a depth direction, and detects an uneven portion of a road surface of the traveling path based on a calculated height change.

### Advantageous Effects of Invention

According to the present invention, it is possible to detect an uneven portion such as a speed bump with high accuracy.

Further features related to the present invention will become apparent from the description of the present specification and the accompanying drawings. Problems, configurations, and effects other than those described above will become apparent by the following description of embodiments.

### Brief Description of Drawings

[FIG. 1] FIG. 1 is a functional block diagram illustrating a configuration of an environment recognition device according to a first embodiment.
[FIG. 2] FIG. 2 is a processing flowchart in the first embodiment.
[FIG. 3] FIG. 3 is a view illustrating an environment around a vehicle in the first embodiment.
[FIG. 4] FIG. 4 is a view illustrating a result of traveling environment identification processing for FIG. 3.
[FIG. 5] FIG. 5 is a conceptual diagram for describing a method of converting each y coordinate of a curb region into a depth z.
[FIG. 6] FIG. 6 is a diagram for describing a height of a curb and curve fitting processing in the first embodiment.
[FIG. 7] FIG. 7 is a processing flowchart for detecting an uneven portion of a road surface.
[FIG. 8] FIG. 8 is a view illustrating a result of traveling environment identification processing.
[FIG. 9] FIG. 9 is a corresponding diagram for FIG. 6 for describing a content of a modified example.
[FIG. 10] FIG. 10 is a functional block diagram illustrating a configuration of an environment recognition device according to a second embodiment.
[FIG. 11] FIG. 11 is a processing flowchart in the second embodiment.
[FIG. 12] FIG. 12 is a diagram for describing a result of measuring a three-dimensional height of a curb and a reference height in the second embodiment.
[FIG. 13] FIG. 13 is a diagram for describing a method of calculating a distance to an uneven portion in the second embodiment.
[FIG. 14] FIG. 14 is a functional block diagram illustrating a configuration of an environment recognition device according to a third embodiment.
[FIG. 15] FIG. 15 is a processing flowchart in the third embodiment.

### Description of Embodiments

Hereinafter, embodiments of the present invention will be described in detail.

### [First Embodiment]

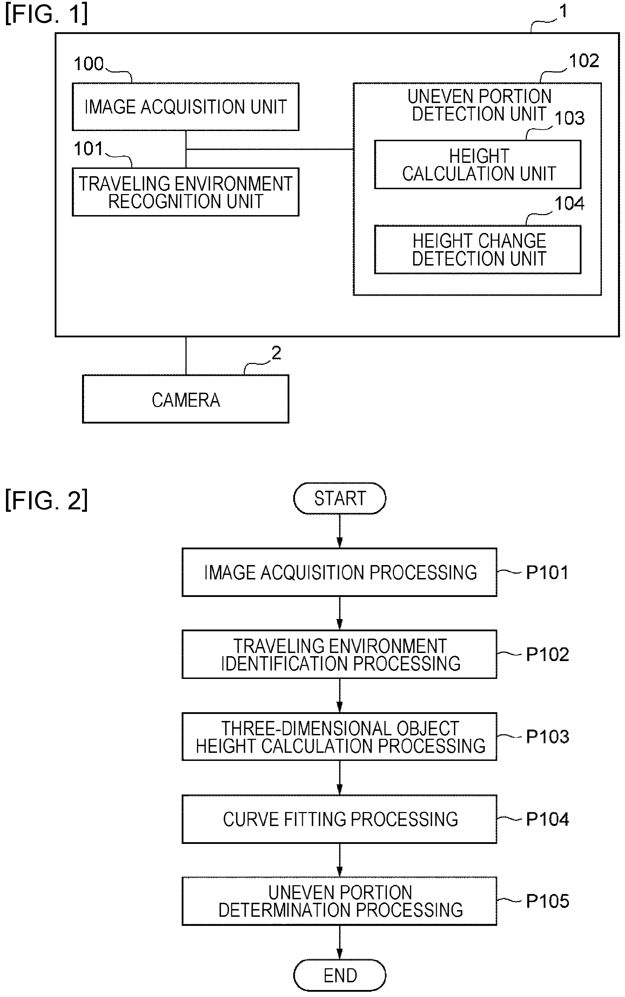

FIG. 1 is a functional block illustrating a configuration of an environment recognition device 1 according to a first embodiment.

The environment recognition device 1 is implemented by an in-vehicle electronic control unit (ECU) including a computer, a memory, a storage device, and the like. One camera 2 is connected to the environment recognition device 1. The camera 2 is a so-called monocular camera, and is disposed, for example, in a vehicle compartment of a vehicle to image an area in front of the vehicle through a windshield. In the present embodiment, the environment recognition device 1 is disposed in a housing of the camera 2. However, the environment recognition device 1 may also be provided separately from the camera 2.

The environment recognition device 1 operates as various functional units by executing a control program stored in a memory or the like of the computer. As illustrated in FIG. 1, the environment recognition device 1 includes an image acquisition unit 100, a traveling environment recognition unit 101, and an uneven portion detection unit 102 as functional units implemented by the operation of the computer.

The image acquisition unit 100 acquires an image captured by the camera 2. Since the camera 2 captures images at regular time intervals, the image acquisition unit 100 acquires the image at each time.

The traveling environment recognition unit 101 receives the image acquired by the image acquisition unit 100 and recognizes a traveling environment. The traveling environment recognition unit 101 recognizes a three-dimensional object positioned at a boundary on a side of a traveling path 300 based on the image. Specifically, a type such as a traveling path, a sidewalk, or a three-dimensional object such as a curb or a guardrail is specified for each pixel captured in the image. A convolutional neural network can be utilized for recognition. In addition, the type of each pixel may be specified using a machine learning algorithm such as random forest.

The uneven portion detection unit 102 detects an uneven portion of a road surface including a speed bump based on a recognition result of traveling environment recognition unit 101. The uneven portion detection unit 102 calculates the number of pixels in the image as a height, fits a curve to the calculated height in a depth direction, and detects a point deviating from the curve as the uneven portion. Specifically, the height of the three-dimensional object (curb, guardrail, or the like) adjacent to the traveling path in a region specified by the traveling environment recognition unit 101 is calculated, and the uneven portion of the road surface is detected based on a height change between the three-dimensional object and the traveling path 300. The uneven portion detection unit 102 includes a height calculation unit 103 and a height change detection unit 104.

Hereinafter, an operation example of the environment recognition device 1 of the present embodiment will be described in detail with reference to the flowchart of FIG. 2.

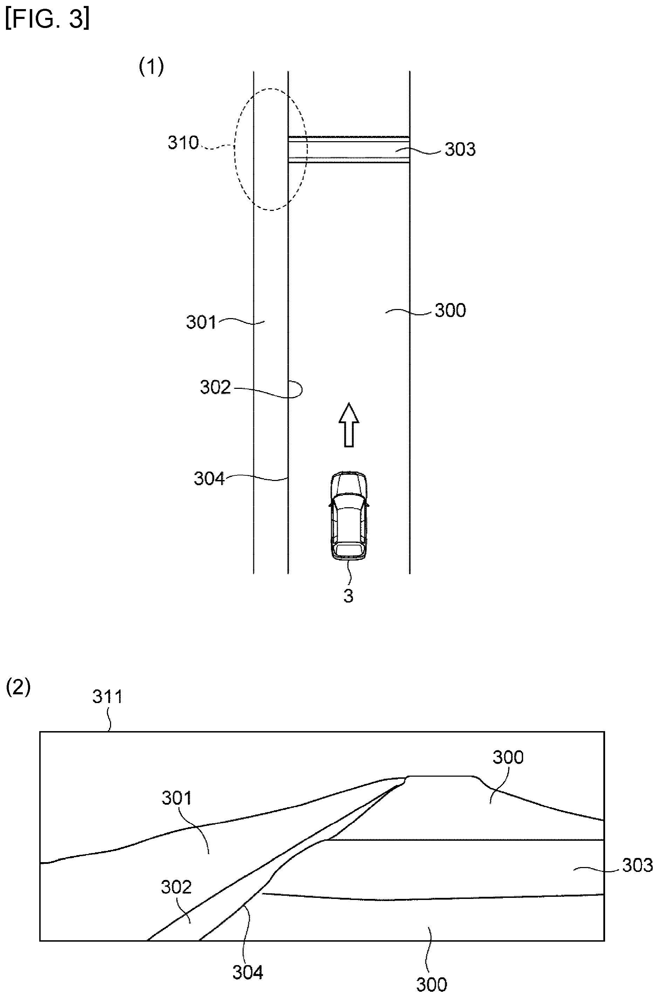

FIG. 2 is a processing flowchart in the first embodiment, FIG. 3 is a diagram illustrating an environment around the vehicle in the first embodiment, FIG. 3(1) is a plan view schematically illustrating a state in which the speed bump exists in front of the vehicle, and FIG. 3(2) is a view schematically illustrating the image acquired by the image acquisition unit 100.

FIG. 3(1) illustrates the road surface of the traveling path 300 on which a vehicle 3 travels and a situation in which a speed bump 303, which is the uneven portion, is disposed on the road surface in front of the vehicle. It is assumed that the camera 2 mounted on the vehicle 3 captures an image 311 illustrated in FIG. 3(2). The traveling path 300, a sidewalk 301, a curb 302, and the speed bump 303 are captured in the image 311.

The curb 302 is disposed at a shoulder of the traveling path 300, and the sidewalk 301 is provided at a position one step higher than the traveling path 300 via the curb 302. The curb 302 rises substantially perpendicularly from the road surface at an end portion (hereinafter, referred to as a boundary position 304) of the traveling path 300 on a side adjacent to the sidewalk 301, is bent toward the sidewalk 301 at an upper end, and forms a step continuous with an upper surface of the sidewalk 301.

The speed bump 303 has a height that allows the vehicle 3 to pass at a low speed, and is provided as a ridge so as to extend over the entire width in a road width direction on the road surface of the traveling path 300. An end portion of the speed bump 303 on a side adjacent to the sidewalk 301 is in contact with the curb 302. The boundary position 304 between the traveling path 300 and the curb 302 extends linearly and continuously in the depth direction of the image 311 at a constant interval from the upper surface of the sidewalk 301, and a height of the boundary position 304 changes such that a distance from the upper surface of the sidewalk 301 is decreased at a place where the speed bump 303 exists, that is, the boundary position 304 approaches the upper surface of the sidewalk 301.

As illustrated in FIG. 2, the environment recognition device 1 sequentially performs image acquisition processing P101, traveling environment identification processing P102, three-dimensional object height calculation processing P103, curve fitting processing P104, and uneven portion determination processing P105.

The image acquisition processing P101 is performed by the image acquisition unit 100. In the image acquisition processing P101, the image captured by the camera 2 is acquired.

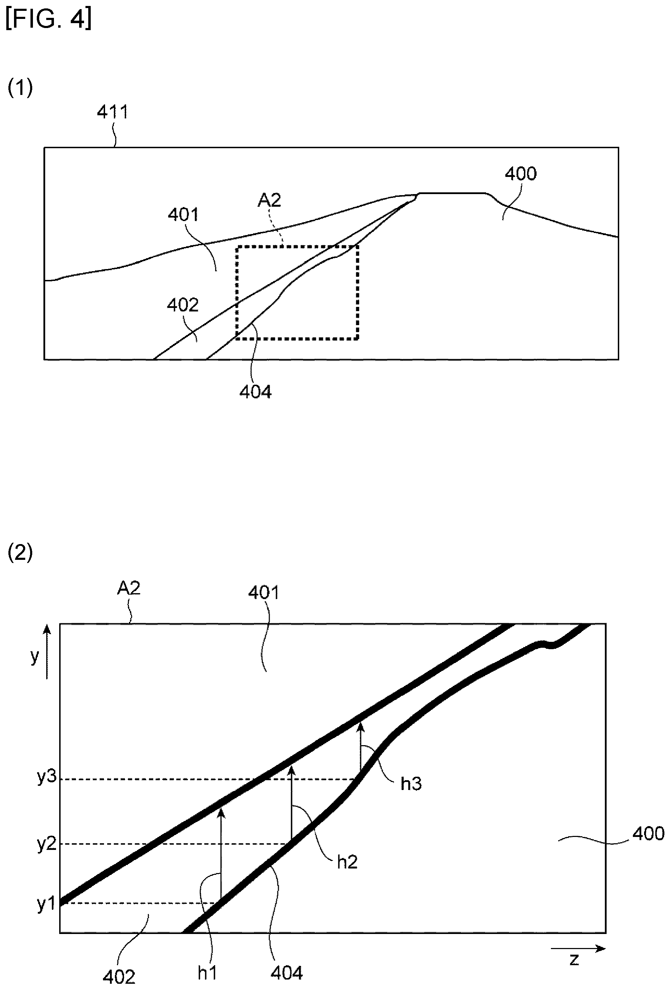

The traveling environment identification processing P102 is performed by the traveling environment recognition unit 101. In the traveling environment identification processing P102, known semantic segmentation is performed on the image acquired from the camera 2 by using the convolutional neural network. An output of the convolutional neural network is illustrated in FIGS. 4(1) and 4(2).

FIG. 4 is a view illustrating a result of the traveling environment identification processing, FIG. 4(1) illustrates the output of the convolutional neural network for the image of FIG. 3(2), and FIG. 4(2) is an enlarged view of a main part A2 of FIG. 4(1). In the convolutional neural network, the identification processing is performed for each pixel of the image 311, and as illustrated in FIG. 4(1), a sidewalk region 401, a curb region 402, and a road surface region 400 are recognized in an image 411 after the identification processing.

The three-dimensional object height calculation processing P103 is performed by the height calculation unit 103 of the uneven portion detection unit 102. In the three-dimensional object height calculation processing P103, a height of the curb 302, which is a three-dimensional object adjacent to the road surface of the traveling path 300, from the traveling path 300 is calculated. The height of the curb 302 from the traveling path 300 is specifically a pixel height h of the curb region 402 from the road surface region 400 (h1, h2, and h3 in FIG. 4(2)). In a case where the speed bump 303 exists on the road surface of the traveling path 300, the height of the curb 302 is a height from an upper surface of the speed bump 303.

In the three-dimensional object height calculation processing P103, the height of the curb 302 in the image in each depth direction which is a direction extending forward from the vehicle 3 is calculated. The height (pixel height) h in the image is calculated based on image positions of a lower end and an upper end of the curb region 402 (an arrow in the figure) at each y coordinate of the curb region 402 (a top-bottom direction of the image 411). FIG. 4(2) illustrates an example of calculating the heights h1, h2, and h3 in the image from the lower end to the upper end of the curb region 402 at coordinate positions y1 to y3.

Thereafter, each y coordinate of the curb region 402 is converted into a depth z.

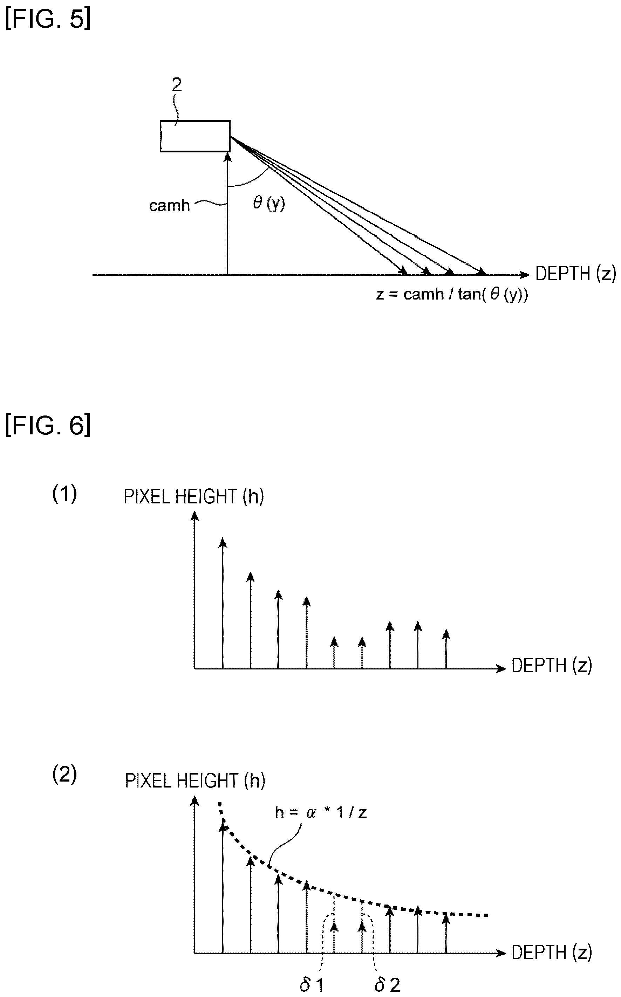

FIG. 5 is a conceptual diagram illustrating a method of converting each y coordinate of the curb region into the depth z.

Each y coordinate of the curb region can be changed to the depth z by z = camh/tan(θ(y)), in which camh represents a ground contact height of the camera 2, and θ(y) represents an angle formed by a vertical direction and a line of sight at each y coordinate in the image 411.

FIG. 6 is a diagram for describing the height of the curb and the curve fitting processing in the first embodiment. FIG. 6 illustrates an example of the height h in the image at each depth z. In the graph of FIG. 6(1), a horizontal axis represents the depth z, and a vertical axis represents the height h in the image. In the three-dimensional object height calculation processing P103, the above processing is performed to acquire the height h in the image at each depth z as illustrated in FIG. 6(1).

The curve fitting processing P104 and the uneven portion determination processing P105 are performed by the height change detection unit 104 of the uneven portion detection unit 102. In the curve fitting processing P104, curve fitting is performed on a calculation result of the three-dimensional object height calculation processing P103.

The execution result is illustrated in FIG. 6(2). The curve is parameterized as h = α × (1/z) to estimate a parameter α that best fits the height h in the image of the curb region 402 at each depth z. Known random sample consensus (RANSAC) is used to estimate the parameter α. By using the RANSAC, it is possible to estimate the parameter after removing an outlier.

In the uneven portion determination processing P105, the uneven portion of the traveling path 300 is detected using the curve estimated in the curve fitting processing P104 and height information of the curb region 402 in the image calculated in the three-dimensional object height calculation processing P103.

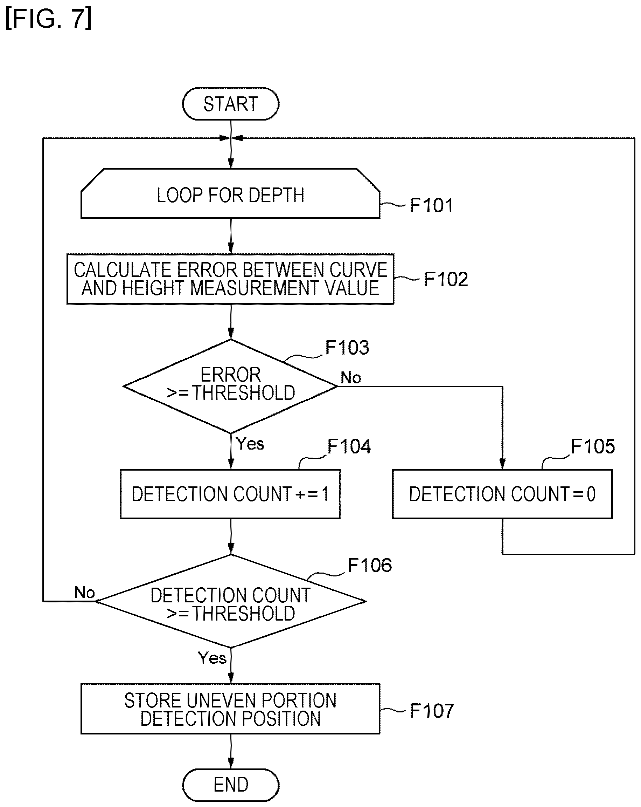

FIG. 7 is a processing flowchart for detecting the uneven portion of the road surface.

First, an error abs(α/z - h(z)) is calculated for the target depth z (F102). Here, α represents the parameter obtained in the curve fitting processing P104, and h(z) represents the height (height calculation value) of the curb region 402 calculated in the three-dimensional object height calculation processing P103. The error indicates an error between the curve and the height of the curb.

Next, the error is compared with a threshold (for example, 10) (F103). In a case where a value of the error is equal to or larger than the threshold, it is determined that the speed bump 303 is highly likely to exist, and a detection count is added by 1 (F104). In a case where the error is smaller than the threshold, the detection count is reset to 0 (F105), and the processing proceeds to error calculation for the height of the curb at the next depth z (F101).

In F106, the detection count is compared to a threshold (for example, 3). In a case where the detection count is equal to or larger than the threshold, it is considered that the speed bump 303 has been detected, and the subsequent processing F107 is performed. In a case where the detection count is smaller than the threshold, the processing proceeds to error calculation for the height of the curb at the next depth z (F101). In F107, image coordinates are stored as an uneven portion detection position. As described above, in the uneven portion determination processing P105, in a case where the height of the curb region 402 in the image deviates from the curve obtained by modeling the height of the curb region 402 a plurality of times as indicated by δ1 and δ2 illustrated in FIG. 6(2), it is determined that the speed bump 303 exists at the corresponding positions.

As described above, the environment recognition device 1 of the present embodiment detects the speed bump 303 based on the height change between the traveling path and the three-dimensional object such as the curb 302 adjacent to the road surface of the traveling path 300. Since the environment recognition device 1 of the present embodiment does not use disparity, the speed bump 303 can be detected with high accuracy even at nighttime when the disparity cannot be calculated.

Furthermore, the environment recognition device 1 of the present embodiment assumes that the camera 2 is a monocular camera, and detects the speed bump 303 based on the height change of the three-dimensional object such as the curb 302 in the image. Since the speed bump 303 can be detected only with the monocular camera without using other three-dimensional sensors, costs incurred by sensors can be reduced.

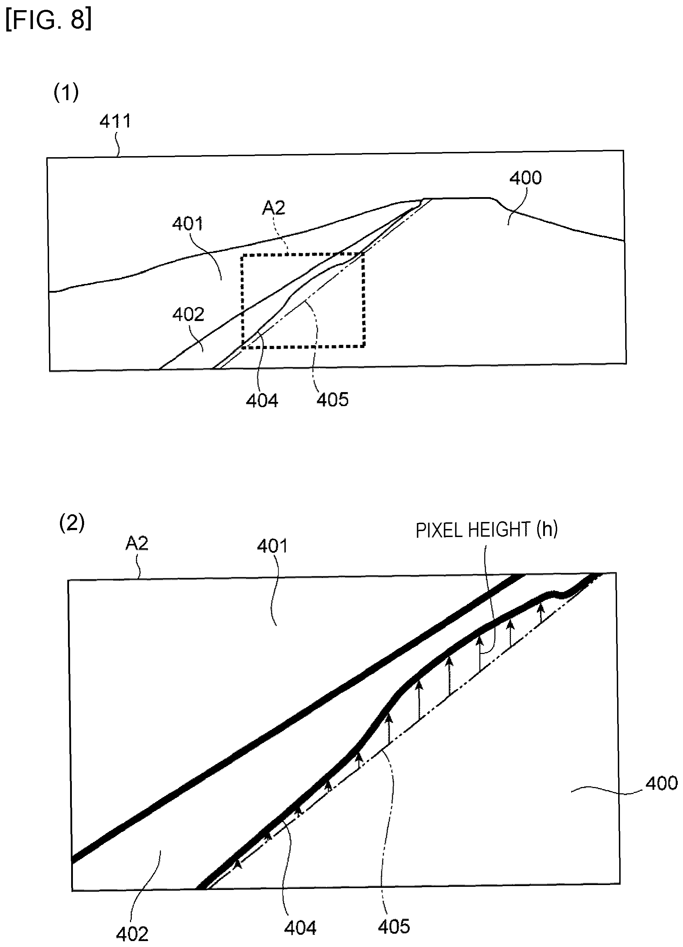

Although a case where the environment recognition device 1 of the present embodiment detects the uneven portion such as the speed bump 303 based on the height change between the upper end of the three-dimensional object such as the curb 302 and the traveling path has been described, in the actual environment, there is also a case where the lower end of the three-dimensional object such as the curb 302 can be detected, but the upper end cannot be detected. In such a case, the uneven portion such as the speed bump 303 can be detected based on the position (boundary position 304) of the lower end of the curb 302 as illustrated in FIG. 8 instead of detecting the curb 302 based on the height change between the upper end of the curb 302 and the traveling path 300 as illustrated in FIG. 5.

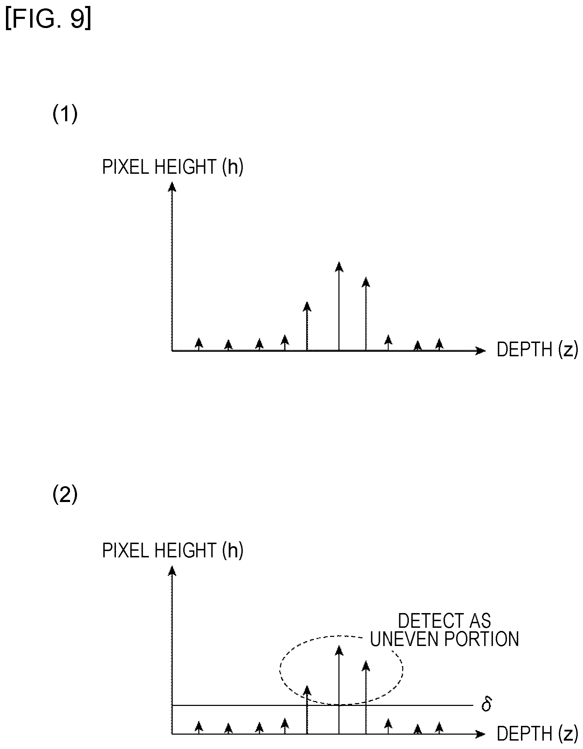

FIG. 8 is a view illustrating a result of the traveling environment identification processing P102, FIG. 8(1) illustrates an output of the convolutional neural network for the image of FIG. 3(2), and FIG. 8(2) is an enlarged view of a main part A2 of FIG. 8(1). FIG. 9 is a corresponding diagram for FIG. 6 for describing a content of a modified example.

In the present modified example, a straight line 405 is fitted along a lower end position of the curb region 402 (see FIG. 8(2)). At this time, the RANSAC is used to model a portion of the curb region 402 that is not in contact with the speed bump 303. Then, the height h in the image from the modeled straight line 405 to the lower end (boundary position 404) of the curb region 402 is acquired for each depth z in the depth direction (see FIG. 9(1)). Then, an upward protruding region in which a plurality of uneven portion candidates whose heights h in the image are equal to or larger than a certain value (δ) are aggregated is detected (see FIG. 9(2)). The region is detected as the speed bump 303. As a result, the uneven portion such as the speed bump 303 can be detected even in a case where the upper end of the three-dimensional object such as the curb 302 cannot be measured.

With the environment recognition device 1 of the present embodiment, it is possible to detect the presence of the uneven portion and grasp a distance to the uneven portion. Therefore, by using distance information to the uneven portion, it is possible to perform vehicle control such as controlling a vehicle speed to decelerate the vehicle in front of the uneven portion or controlling a vehicle suspension to alleviate an impact when the vehicle passes over the uneven portion.

### [Second Embodiment]

Next, a second embodiment of the present invention will be described.

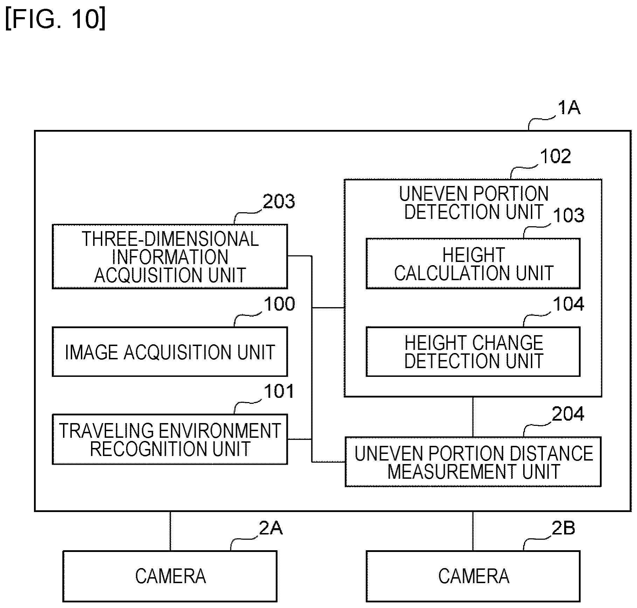

FIG. 10 is a functional block illustrating a configuration of an environment recognition device 1A according to the second embodiment.

In the configuration of the second embodiment, two cameras 2A and 2B are connected to the environment recognition device 1A as stereo cameras. Hereinafter, only a block functionally different from the first embodiment and a block newly added in the second embodiment will be described.

An image acquisition unit 100 acquires two images obtained by imaging an area in front of a vehicle at the same time by the two left and right cameras 2A and 2B. A three-dimensional information acquisition unit 203 uses the two images acquired by the image acquisition unit 100 to acquire three-dimensional information of the surrounding environment. Specifically, the three-dimensional information can be calculated using a known stereo matching method.

Similarly to the configuration of the first embodiment, a traveling environment recognition unit 101 may specify a type for each pixel and estimate a label including a three-dimensional object in a traveling environment, or may use distance information acquired by the three-dimensional information acquisition unit 203 to specify a region of the three-dimensional object standing in a direction perpendicular to the ground.

An uneven portion distance measurement unit 204 measures a distance from a vehicle 3 to an uneven portion detected by an uneven portion detection unit 102. Specifically, the distance to the uneven portion may be determined using depth information at the time of detection, or a distance to a three-dimensional object such as a curb or a guardrail positioned at a place adjacent to the uneven portion may be set as the distance to the uneven portion.

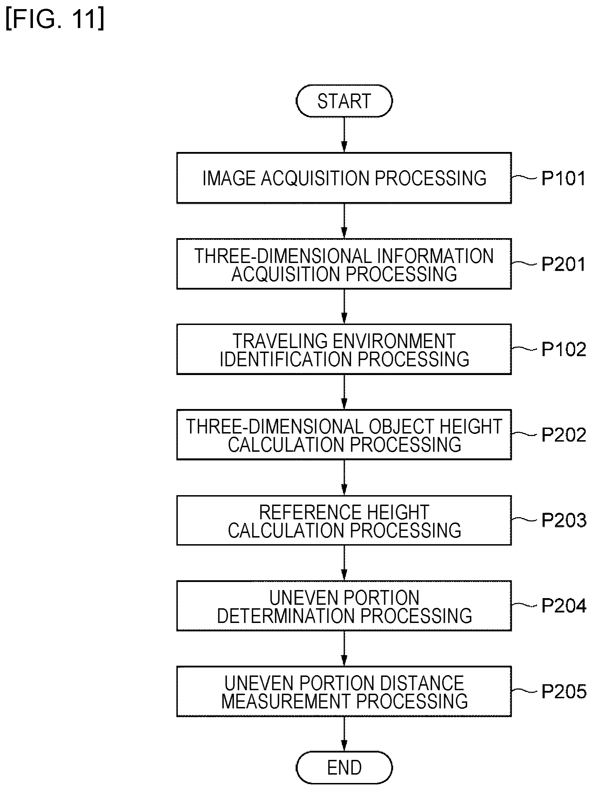

Hereinafter, an operation example of the environment recognition device 1A of the present embodiment will be described with reference to the flowchart of FIG. 11. It is assumed that the scene illustrated in FIG. 3 is imaged by the cameras 2A and 2B. Steps of processing having different processing contents from those of the flowchart of the first embodiment illustrated in FIG. 2 are three-dimensional information acquisition processing P201, three-dimensional object height calculation processing P202, reference height calculation processing P203, uneven portion determination processing P204, and uneven portion distance measurement processing P205, and these steps of processing are described below.

The three-dimensional information acquisition processing P201 is performed by the three-dimensional information acquisition unit 203. In the three-dimensional information acquisition processing P201, stereo matching is performed using the left and right images acquired by the cameras 2A and 2B. Disparity d is calculated for each pixel of the image by performing stereo matching. Then, a distance z to the three-dimensional object = f*B/(w*d) is calculated using the calculated disparity d. Here, f represents a focal length of the camera, B represents a base length of the stereo camera, and w represents an actual size of one pixel.

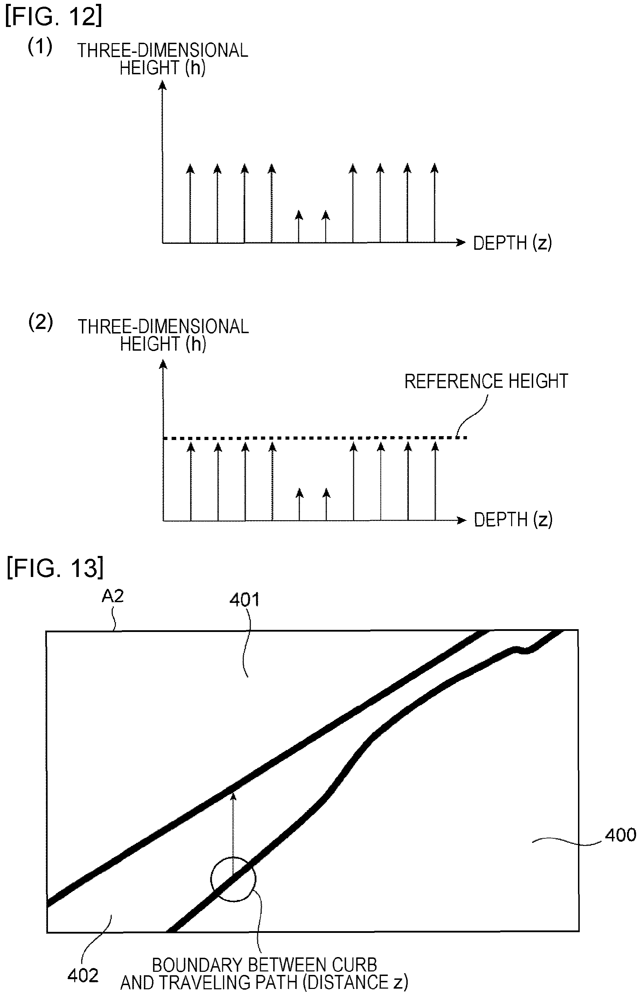

The three-dimensional object height calculation processing P202 and the reference height calculation processing P203 are performed by a height calculation unit 103 of the uneven portion detection unit 102. In the three-dimensional object height calculation processing P202, a three-dimensional height h of a curb 302 recognized in the traveling environment identification processing P102 is calculated. The three-dimensional height h of the curb can be calculated using the following equation: h = (w*hi*z)/f. Here, hi represents the height of the curb 302 in the image, and z represents the distance calculated in the three-dimensional information acquisition processing P201. By performing the calculation on each pixel of the curb 302, waveform data of a horizontal axis z and a vertical axis h is generated as illustrated in FIG. 12(1).

In the reference height calculation processing P203, the height of the curb 302 is determined using each three-dimensional height of the curb 302. In the reference height calculation processing P203, the three-dimensional height of the three-dimensional object is calculated in a depth direction as the height, and a reference height of the three-dimensional object is determined based on the three-dimensional height in each depth direction. Specifically, a median value of the three-dimensional heights acquired from the curb 302 is set as the reference height. The concept of the reference height is illustrated in FIG. 12(2).

The uneven portion determination processing P204 is performed by a height change detection unit 104 of the uneven portion detection unit 102. In the uneven portion determination processing P204, the uneven portion is detected using information regarding the reference height and each three-dimensional height of the curb 302. Specifically, in a case where a distance to the target curb 302 is z, a difference abs(h' - h(z)) between a reference height h' and a three-dimensional height h(z) of the curb 302 is calculated, and it is determined whether or not a value of the difference is equal to or larger than a threshold (for example, 10 cm). In a case where the value is equal to or larger than the threshold, the corresponding point is set as a candidate for the uneven portion. Thereafter, abs(h' - h(z')) is similarly calculated for the next distance z', and it is determined whether or not abs(h'-h(z')) is equal to or larger than the threshold. Similarly, in a case where the difference between the heights is equal to or larger than the threshold for the distance z', it is determined that the uneven portion is present at the corresponding point.

The uneven portion distance measurement processing P205 is performed by the uneven portion distance measurement unit 204. In the uneven portion distance measurement processing P205, the distance from the vehicle 3 to the uneven portion is determined. In the uneven portion determination processing P204, as described above, in a case where the height differences at the distance z and the distance z' (z' > z) are equal to or larger than the threshold, the distance z, which is a shorter distance from the own vehicle, is set as the distance from the vehicle 3 to the uneven portion.

As described above, the environment recognition device 1A of the present embodiment calculates the three-dimensional height of the curb 302, and determines that there is an uneven portion at a point where the three-dimensional height deviates from the reference height of the curb 302. In general, the three-dimensional height of the curb 302 is constant in the depth direction, and thus, the reference height of the curb 302 can be calculated only by acquiring the median value of the measured three-dimensional heights of the curb 302, and the uneven portion can be detected without using calculation with a high processing load such as curve fitting processing.

With the environment recognition device 1A of the present embodiment, it is possible to detect the uneven portion and grasp the distance to the uneven portion. Therefore, by using distance information to the uneven portion, it is possible to perform vehicle control such as controlling a vehicle speed to decelerate the vehicle in front of the uneven portion or controlling a vehicle suspension to alleviate an impact when the vehicle passes over the uneven portion.

In the uneven portion distance measurement processing P205 of the second embodiment described above, the distance to the uneven portion is determined using the distance z at which it is determined that the uneven portion exists in the uneven portion determination processing P204. However, a curb region 402 illustrated in FIG. 13 can be searched upward (an arrow direction in the figure), and a median value of distances in the curb region 402 can be set as the distance to the uneven portion. In this way, since the distance to the uneven portion can be determined using a plurality of pieces of distance information, distance accuracy can be improved.

### [Third Embodiment]

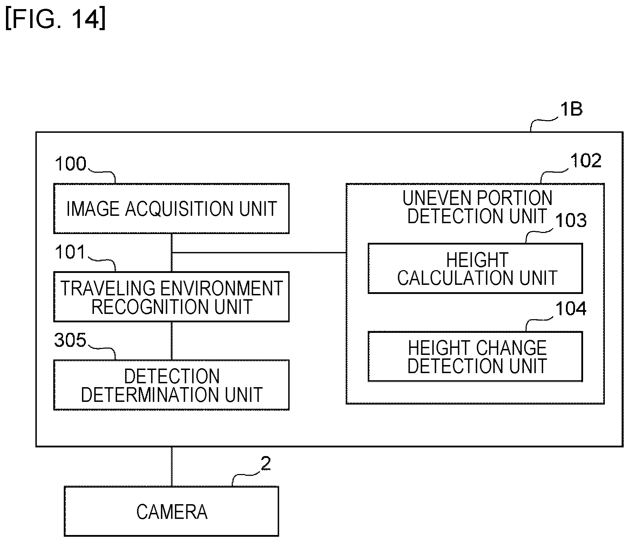

FIG. 14 is a functional block illustrating a configuration of an environment recognition device 1B of a third embodiment. The environment recognition device 1B of the third embodiment has a configuration in which one camera 2 is connected as in the configuration of the first embodiment. A difference from the first embodiment is that the environment recognition device 1B includes a detection determination unit 305.

The detection determination unit 305 determines whether or not to perform detection of an uneven portion based on a texture of a three-dimensional object. Specifically, the texture of the three-dimensional object acquired in the past is compared with the texture of the three-dimensional object in the current frame, and if the textures are similar to each other, detection of the uneven portion is performed.

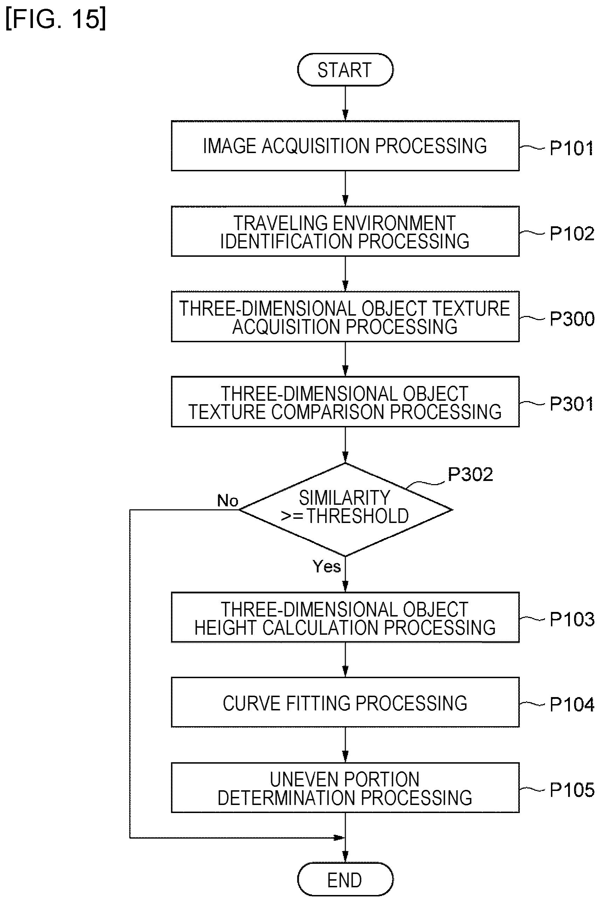

Hereinafter, an operation example of the environment recognition device 1B of the present embodiment will be described with reference to the flowchart of FIG. 15. Steps of processing different from those of the flowchart of the first embodiment illustrated in FIG. 2 are three-dimensional object texture acquisition processing P300, three-dimensional object texture comparison processing P301, and determination processing P302, and these steps of processing are described below.

In the three-dimensional object texture acquisition processing P300, the texture of the three-dimensional object (curb or the like) in each frame is acquired as a template and stored in a storage area as the template.

In the three-dimensional object texture comparison processing P301, the template of the three-dimensional object acquired in the past is scanned on a three-dimensional object region of the current frame. Then, a region having the highest similarity is specified. The similarity is compared with a threshold (for example, 0.5), and in a case where the similarity is equal to or higher than the threshold, the processing proceeds to the subsequent three-dimensional object height calculation processing P103. On the other hand, in a case where the similarity is lower than the threshold, detection of the uneven portion is not performed in the current frame.

As described above, the environment recognition device 1B of the present embodiment compares the current and past textures of the three-dimensional object (curb or the like), detects the uneven portion in the current frame in a case where the textures are similar to each other, and does not perform detection of the uneven portion in the current frame in a case where the textures are not similar to each other. As a result, since the detection processing is not performed, in a case where a small falling object or the like exists at a boundary between a traveling path 300 and a curb 302, it is possible to prevent an erroneous determination that the uneven portion such as a speed bump 303 exists on a road surface of the traveling path 300 due to the falling object when the uneven portion does not originally exist on the road surface of the traveling path.

As another embodiment, in addition to the configurations of the first to third embodiments described above, a configuration using map data may be used. Specifically, a position of the uneven portion recognized once is registered on a map, and when the vehicle travels around the uneven portion registered on the map at the time of the next traveling, the threshold in the uneven portion determination processing of FIGS. 2 and 11 is relaxed. In the embodiment described so far, the presence of the uneven portion is determined in a case where the uneven portion candidate continuously exists. However, as the relaxation of the threshold, the presence of the uneven portion can be determined in a case where it is determined once that the uneven portion candidate exists. As a result, in a case where the uneven portion exists on the map, it is possible to enhance responsiveness to detection of the uneven portion and to prevent non-detection.

In addition, the environment recognition device according to the present invention can be applied to a portion other than the speed bump as the uneven portion of the road surface of the traveling path 300. Specifically, the present invention can also be applied to a downwardly recessed portion such as a dent of the road surface like a pothole.

In addition, the environment recognition device according to the present invention can be generalized as a device that detects an object on a road surface corresponding to a horizontal plane when viewed from the in-vehicle camera by using information of a vertical plane such as a three-dimensional object adjacent to the object. Therefore, the present invention can also be applied to detection of structures and the like other than the above.

Although the present invention has been described with reference to the first to third embodiments, the present invention is not limited to the configurations of the above-described embodiments. Various changes that can be understood by those skilled in the art within the scope of the present invention can be made for the configurations and details of the present invention.

Although the embodiments of the present invention have been described in detail above, the present invention is not limited to the above embodiments, and various design changes can be made without departing from the gist of the present invention described in the claims. For example, the above-described embodiments have been described in detail in order to explain the present invention in an easy-to-understand manner, and the present invention is not necessarily limited to those having all the configurations described. Further, a part of a configuration of an embodiment can be replaced with a configuration of another embodiment, and to a configuration of an embodiment, a configuration of another embodiment can be added. In addition, a part of the configuration of each embodiment can be added with another configuration, can be deleted, and can be replaced with another configuration.

### Reference Signs List

1, 1A, 1B environment recognition device
2, 2A, 2B camera
3 vehicle
100 image acquisition unit
101 traveling environment recognition unit
102 uneven portion detection unit
103 calculation unit
104 change detection unit
203 three-dimensional information acquisition unit
204 uneven portion distance measurement unit
300 traveling path
301 sidewalk
302 curb
303 speed bump (uneven portion)
304 boundary position
305 detection determination unit
311 image
400 road surface region
401 sidewalk region
402 curb region

## Claims

1. An environment recognition device mounted on a vehicle, the environment recognition device comprising:
an image acquisition unit that acquires an image captured by a camera;
a traveling environment recognition unit that recognizes a three-dimensional object positioned at a boundary of a traveling path based on the image; and
an uneven portion detection unit that calculates a height of the three-dimensional object in a depth direction, and detects an uneven portion of a road surface of the traveling path based on a calculated height change.

2. The environment recognition device according to claim 1, wherein the uneven portion detection unit calculates the number of pixels in the image as the height, fits a curve to the calculated height in the depth direction, and detects a point deviating from the curve as the uneven portion.

3. The environment recognition device according to claim 1, further comprising a three-dimensional information acquisition unit that acquires three-dimensional information of a surrounding environment,
wherein the uneven portion detection unit calculates a three-dimensional height of the three-dimensional object in the depth direction as the height, determines a reference height of the three-dimensional object based on the three-dimensional height in each depth direction, and detects a point deviating from the reference height as the uneven portion.

4. The environment recognition device according to claim 3, further comprising an uneven portion distance measurement unit that measures a distance from the vehicle to the uneven portion,
wherein the uneven portion distance measurement unit sets a distance acquired from the three-dimensional object as the distance from the vehicle to the uneven portion.

5. The environment recognition device according to claim 1, comprising a detection determination unit that stores a past texture of the three-dimensional object, compares a current texture with the past texture, and determines not to perform detection of the uneven portion by the uneven portion detection unit in a case where the current texture and the past texture are different from each other.
